# EUROPÄISCHE PATENTSCHRIFT

(11) **EP 0 751 061 B1**
(45) Veröffentlichungstag und Bekanntmachung des Hinweises auf die Patenterteilung: **12.11.1997**
(21) Anmeldenummer: 96109585.8
(22) Anmeldetag: 14.06.1996
(51) Int. Cl.: B62D 65/00

(54) **Anlage zum Fügen der Chassis-Aggregate mit der Karosserie eines Kraftfahrzeugs**
Device for joining mechanical sub-assemblies with the body of a motor vehicle
Dispositif pour assembler les sous-ensembles mécaniques avec la carrosserie d'un véhicule à moteur

(30) Priorität: 27.06.1995 DE 19523294
(43) Veröffentlichungstag der Anmeldung: 02.01.1997
(73) Patentinhaber: ADAM OPEL AG, 65423 Rüsselsheim (DE)
(72) Erfinder: Sobing, Dieter, Dipl.-Ing. (FH), 65428 Rüsselsheim (DE); Sabo, Franz, Dipl.-Ing., 64319 Pfungstadt (DE); Müller, Hans-Dieter, Dipl.-Ing. (FH), 65479 Raunheim (DE)
(74) Vertreter: Kümpfel, Heinz, Dipl.-Ing.

(56) Entgegenhaltungen:
- EP-A- 0 226 212
- EP-A- 0 629 469
- DE-A- 3 729 084
- DE-A- 4 313 407
- US-A- 4 734 979

## Beschreibung

Die Erfindung betrifft eine Anlage zum Fügen der Chassis-Aggregate mit der Karosserie eines Kraftfahrzeuges nach dem Oberbegriff des Anspruchs 1.

Eine derartige Anlage ist mit EP 0 629 469 A1 beschrieben.

Bei dieser bekannten Anlage zentrieren sich die in einer Ebene frei beweglichen Aufbauplatten durch jeweils einen Mitnahmebolzen direkt an der Karosserie, die mittels eines Karosseriegehänges an einem Hängeförderer gehalten und geführt ist. Die Lage einer so geführten Karosserie ist jedoch sehr ungenau und weiten Toleranzen unterworfen, so daß die notwendige feine Zentrierung für eine automatische Montage der Chassis-Aggregate zu den notwendigen Werkzeugen auf einem ebenfalls über einen Mitnahmebolzen getriebenen Werkzeugbock problematisch ist. Unvermeidliche Zentrierungsabweichungen zwischen den Aufbauböcken und den Werkzeugböcken erschweren so die angestrebte automatische Montage. Ein weiterer Mangel dieser bekannten Anlage ergibt sich dadurch, daß sich die Werkzeugböcke zwar parallel zur Montagelinie innerhalb der Montagestrecke verschieben lassen, so daß im automatischen Montagebetrieb die erforderlichen Werkzeugeingriffe realisierbar sind. Aber bei einer Störung an einem der Werkzeugböcke oder einem der Aufbauböcke muß die gesamte Anlage zur Beseitigung dieser Störung angehalten werden. Ein Überbrücken solcher Störungen durch manuelle Handhabung der Werkzeuge ist dabei nicht möglich, da die Werkzeugböcke die Zugänglichkeit zur Karosserie und den mit ihr zu verbindenden Aggregaten im Bereich der Montagezone verstellen. Ein Beiseiteräumen der Werkzeugböcke ist aufwendig und kann zu Beschädigungen der Vorrichtungsteile führen.

Aufgabe der Erfindung ist es, eine Anlage der eingangs genannten Art so zu verbessern, daß eine Zentrierung der auf den Aufbauplatten aufliegenden Aggregate auch bei extremen Lageabweichungen der Karosserie von der Sollage ohne Probleme und im automatischen Betrieb möglich ist und daß bei Störungen, insbesondere an den Werkzeugböcken, eine schnelle Umstellung auf manuelle Handhabung der Werkzeuge möglich ist, die Werkzeugböcke ohne Gefahr einer Beschädigung aus der Montagezone entfernbar sind und ohne Beeinträchtigung der weiterlaufenden Fügeoperationen instand gesetzt werden können.

Erfindungsgemäß wird diese Aufgabe gemäß den kennzeichnenden Merkmalen des Patentanspruches 1 gelöst.

Durch die direkte Verbindung der Werkzeugböcke mit den Aufbauplatten der Aufbauböcke mittels der Ausrichtelemente an den Werkzeugböcken werden die Werkzeugböcke auch bei einer vorab nur ungenauen Positionierung über den Mitnahmebolzen und das Karosseriegehänge sehr genau über die von den Aufbauplatten zur Karosserie führenden Zentrierzylinder in Position gebracht. Die Zentrierzylinder wiederum werden vor ihrem Eingriff in die Karosserie durch den Mitnahmebolzen an den Werkzeugböcken vororientiert, so daß grobe Stellungsabweichungen der Karosserie zu den Aufbauplatten ausgeglichen werden.

Durch die freie Ausweichmöglichkeit der Werkzeugböcke entgegen der Montagerichtung kann bei laufender Anlage, also ohne Unterbrechung der Produktion, von automatisierter Handhabe der Montagewerkzeuge auf manuelle Handhabung umgestellt werden, wobei die Werkzeugböcke dann außerhalb des Produktionsprozesses plaziert sind und ohne Probleme gewartet und repariert werden können. Die Aufbauböcke können trotzdem weiterhin genutzt werden, so daß auch bei manueller Werkzeughandhabung eine mechanisierte kontinuierliche Fertigung möglich bleibt. Weiterhin vorteilhaft ist, daß die Einführung der Werkzeugböcke in die Produktion bei laufender Arbeit (manuelle Handhabung) erfolgen kann.

Die Ansprüche 2 bis 6 geben Hinweise für eine vorteilhafte Ausgestaltung der Erfindung.

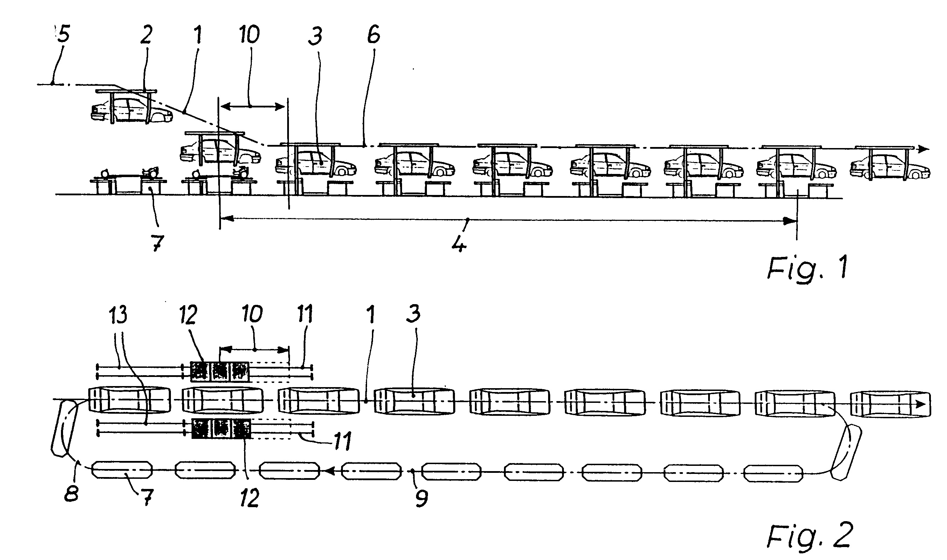

Ein Ausführungsbeispiel der Erfindung ist nachstehend anhand von Zeichnungen näher beschrieben. Es zeigen
- Figur 1:: die schematisierte Seitenansicht einer erfindungsgemäßen Anlage;
- Figur 2:: eine Draufsicht auf die Anlage nach Figur 1;
- Figur 3:: die Position der Anlage, bei welcher die am Hängeförderer befindliche Karosserie den auf einem Aufbaubock aufgelegten Chassis-Aggregaten angenähert wird;
- Figur 4:: die Position der Anlage, bei welcher eine Vorpositionierung zwischen Karosserie und Chassis-Aggregaten erfolgt;
- Figur 5:: die Position der Anlage, bei welcher sich die Chassis-Aggregate zur Karosserie zentrieren;
- Figur 6:: die Position der Anlage, bei welcher sich die Karosserie und die Chassis-Aggregate miteinander verbinden;
- Figur 7:: die Position der Anlage, bei welcher ein Werkzeugbock vom Hängeförderer entkoppelt ist,
- Figur 8:: die Position der Anlage, bei welcher die Montage der Chassis-Aggregate abgeschlossen und auch der Aufbaubock entkoppelt ist.

Ein Hängeförderer 1 fördert kontinuierlich an Karosseriegehänge 2 zentriert aufliegende Karosserien 3 von zu montierenden Kraftfahrzeugen an einer Montagestrecke 4 der Montagelinie entlang, wobei die Förderbahn des Hängeförderers 1 vor der Montagestrecke 4 die Karosserie 3 auf einem hohen Niveau 5 führt und am Anfang der Montagestrecke 4 auf ein niedrigeres Niveau 6 absinkt. Über die Länge der Montagestrecke 4 sind innerhalb der am Hängeförderer 1 befindlichen Karosserien 3 Aufbauböcke 7 auf einem Ovalband 8 in Flurhöhe geführt. Die Aufbauböcke 7 bewegen sich auf dem unterhalb des Hängeförderers 1 befindlichen Teil des Ovalbandes 8 in gleicher Geschwindigkeit wie die Fördergeschwindigkeit des Hängeförderers 1. Am Ende der Montagestrecke 4 gelangen die Aufbauböcke 7 auf eine Rückführschleife 9 des Ovalbandes 8, welche die Aufbauböcke 7 neben der Montagestrecke 4 wieder an dessen Anfang zurückführt.

Am Anfang der Montagestrecke 4 und in diese einbezogen ist eine Fügezone 10, in welcher beidseits der Montagestrecke 4 Führungsbahnen 11 angeordnet sind. Auf den Führungsbahnen 11 befindet sich verschiebbar jeweils ein Werkzeugbock 12. Die Führungsbahnen 11 erstrecken sich entgegen der Förderrichtung des Hängeförderers 1 aus dem Bereich der Montagestrecke 4 so weit hinaus, daß die Werkzeugböcke 12 auf diese Verlängerung 13 der Führungsbahnen 11 aus der Fügezone 10 entgegen der Förderrichtung des Hängeförderers 1 ohne Schwierigkeiten entfernt und wieder eingefügt werden können.

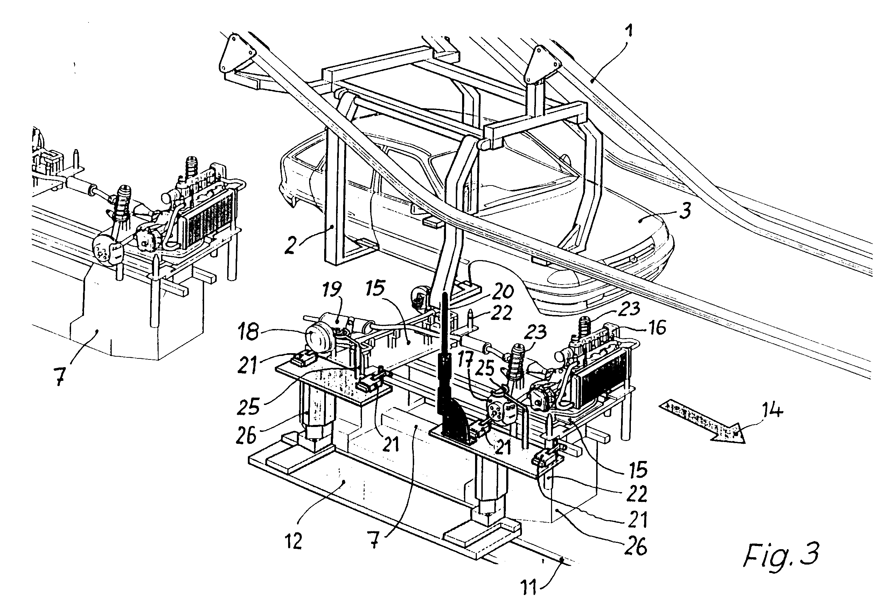

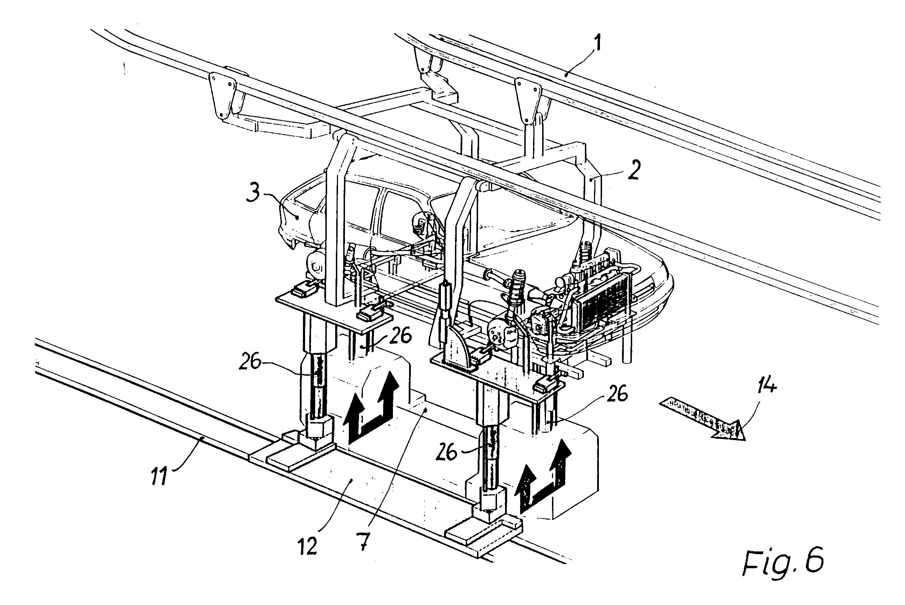

In den Figuren 3 bis 7 ist das Zusammenspiel zwischen dem Hängeförderer 1, den Aufbauböcken 7 und den Werkzeugböcken 12 beispielhaft dargestellt.

In Figur 3 ist dargestellt, wie an dem Hängeförderer 1 mittels eines Karosseriegehänges 2 die Karosserie 3 kontinuierlich in Richtung des Pfeiles 14 bewegt wird. In gleicher Richtung bewegen sich auf dem Ovalband 8 die Aufbauböcke 7 unterhalb der Karosseriegehänge 2. Auf den Aufbauböcken 7 sind in an sich bekannter Weise auf in Längs- und Querrichtung positionierbare Aufbauplatten 15 Chassis-Aggregate wie Motor-Getriebeaggregat 16, Vorderachse 17, Hinterachse 18, Abgasanlage 19 usw. aufgelegt. Das Auflegen erfolgt im Bereich der Rückführschleife 9 des Ovalbandes 8. Die Chassis-Aggregate sind auf den Aufbauplatten 15 in einer definierten Einbaulage gehalten. Wie Figur 3 zeigt, befindet sich unterhalb der Karosserie 3, die von einem hohen Transport-Niveau 5 auf das niedrigere Montage-Niveau 6 gesenkt wird, ein Aufbaubock 7 mit aufgelegten Chassis-Aggregaten.

Dem der Karosserie 3 bereits zugeordnete Aufbaubock 7 ist an beiden Seiten der Montagelinie im Bereich der Fügezone 10 ein Werkzeugbock 12 zugeordnet. (In den Figuren 3 bis 7 ist jeweils nur auf der dem Betrachter zugewandten Seite der Werkzeugbock 12 dargestellt.) An jedem Werkzeugbock 12 befindet sich ein in Richtung zum Karosseriegehänge 2 hin ausfahrbarer Mitnahmebolzen 20, welcher in der Bewegung des Karosseriegehänges 2 in Richtung des Pfeiles 14 mit dem Karosseriegehänge 2 in Eingriff gerät und damit den Werkzeugbock 12 zwangsweise mitnimmt und gegenüber der Karosserie 3 grob ausrichtet.

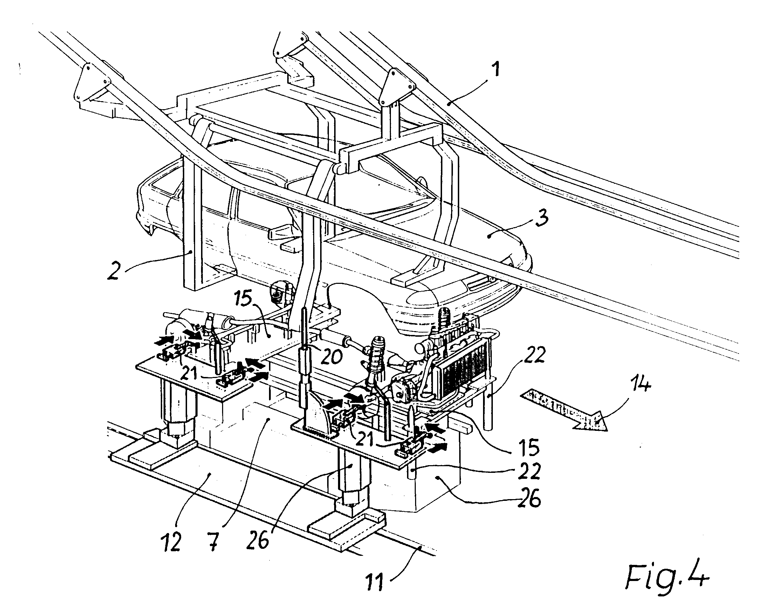

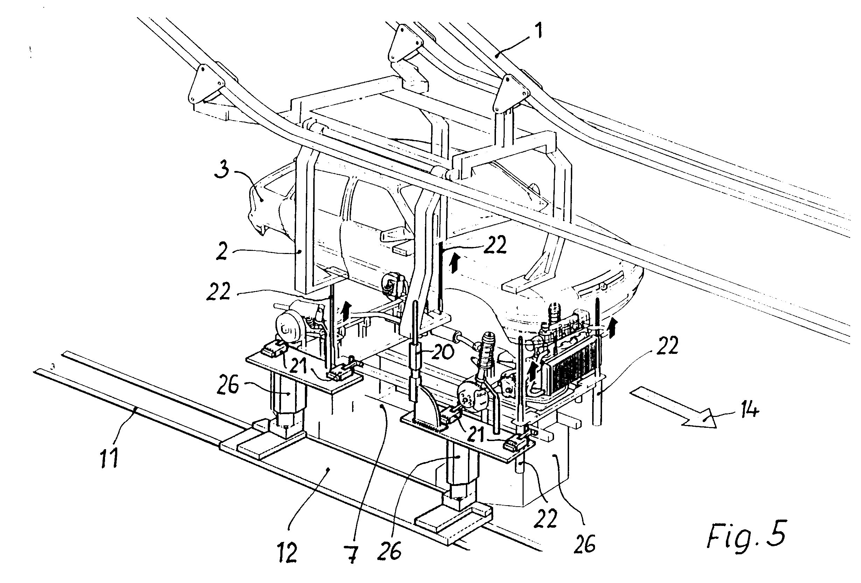

Vom Werkzeubock 12 aus werden über Ausrichtelemente 21, welche hydraulisch, elektrisch oder auch pneumatisch beaufschlagt sein können, die Aufbauplatten 15 der Aufbauböcke 7 gemäß der Position der Karosserie 3 ausgerichtet (Figur 4). Gleichzeitig senkt sich die Karosserie 3 weiter in Richtung auf den Aufbaubock 7 hin ab. An jeder Aufbauplatte 15 des Aufbaubockes 7 befinden sich zwei in Richtung zur Karosserie 3 ausfahrbare Zentrierzylinder 22, welche in dieser Phase der Montage ausfahren und infolge der Vorzentrierung über den Mitnahmebolzen 20, den Werkzeugbock 12 und dessen Ausrichtelemente 21 sicher in Zentrieraufnahmen der Karosserie 3 eingreifen (Figur 5). Die Karosserie 3 hat sich dabei auch dem Montage-Niveau 6 genähert und bewegt sich nun auf diesem Niveau 6 weiter. Gleichzeitig werden immer der Aufbaubock 7 und die Werkzeugböcke 12 gleichsinnig mitgeführt.

Wie Figur 5 auch erkennen läßt, werden Teile von Aggregaten, wie z. B. die Federbeine 23 der Vorderachse 17 sowie die Stoßdämpfer 24 der Hinterachse 18, von Haltewerkzeugen 25 in eine für das Einfügen in die Karosserie 3 optimale Position gestellt. Dazu sind an den Werkzeugböcken 12 jeweils Haltewerkzeuge 25 angeordnet, die mit mechanischen Greifmitteln ausgerüstet sind und die ihnen zugeordneten Teile greifen und positionieren können.

Die Aufbauböcke 7 sowie die Werkzeugböcke 12 sind jeweils mit hydraulisch oder mechanisch ausfahrbaren Grundgestellen 26 ausgerüstet. Mittels dieser Grundgestelle 26 werden die auf den Aufbauböcken 7 aufliegenden, gegenüber der Karosserie 3 zentrierten und von den auf den Werkzeugböcken 12 befindlichen Haltewerkzeugen 25 gehaltenen Chassis-Aggregaten an die Karosserie 3 herangehoben und in ihre an der Karosserie 3 befindlichen Montageöffnungen eingeführt.

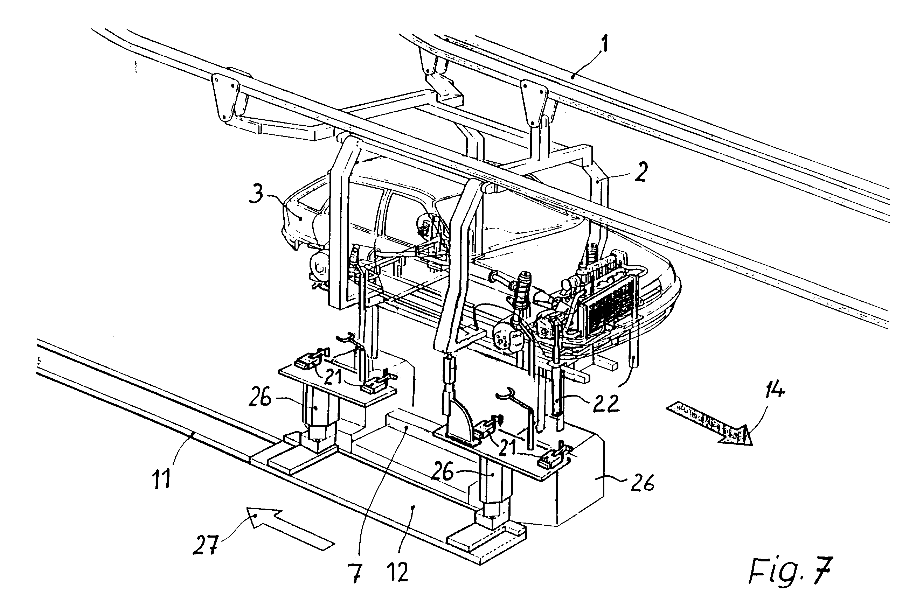

Nach der exakten Positionierung der Chassis-Aggregate an der Karosserie kann das Grundgestell 26 des Werkzeugbocks 12 abgesenkt werden. Die Aggregate werden von dem Aufbaubock 7 in ihrer Position gehalten, wobei sich der Werkzeugbock 12 bereits auf der Führungsbahn 11 zurückbewegen kann (Pfeil 27 - Figur 7).

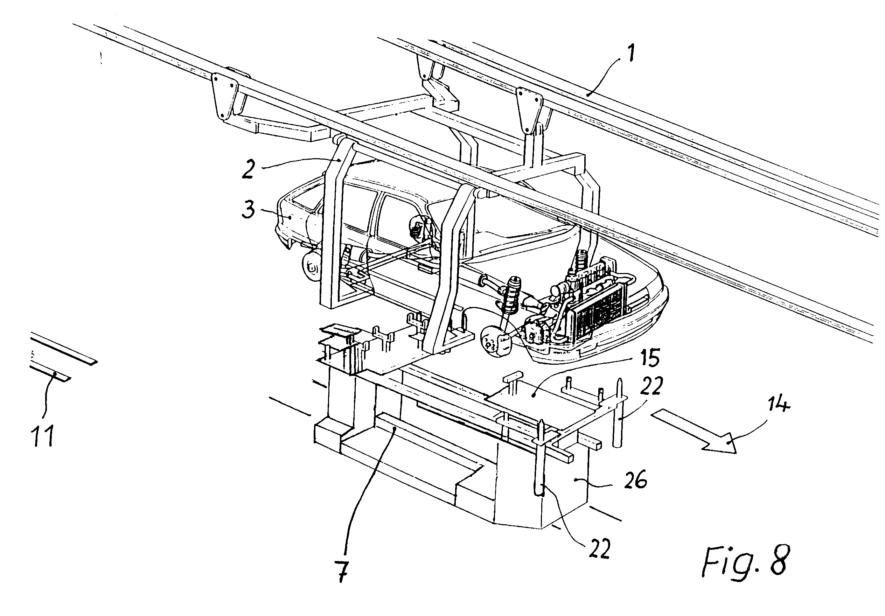

Mit Hilfe von Schrauben werden die Aggregate innerhalb der Montagestrecke 4 an der Karosserie 3 befestigt. In der Folge werden die Mitnahmebolzen 20 eingefahren. Nach ausreichender Befestigung der Chassis-Aggregate an der Karosserie 3 durch selbsttätige oder manuell geführte Schrauber im Verlaufe der weiteren Montagestrecke 4 senkt sich auch der Aufbaubock 7 durch Einfahren seiner Grundgestelle 26 (Figur 8). Der Aufbaubock 7 kann aus der Montagestrecke 4 heraus auf die Ruckführschleife 9 schwenken. Er wird dort neu für einen nächsten Montageprozeß mit Chassis-Aggregaten bestückt.

## Patentansprüche

1. Anlage zum Fügen von Chassis-Aggregaten mit der Karosserie eines Kraftfahrzeuges, bei der die Karosserie (3) entlang einer Montagelinie an einem Hängeförderer (1) mit gleichbleibender Geschwindigkeit geführt ist und unterhalb der Karosserie (3) auf einem mit einer Längsseite über eine Montagestrecke (4) in die Montagelinie eingreifenden Ovalband (8) mit gleicher Geschwindigkeit wie die Karosserie Aufbauböcke (7) geführt sind, die Aufbauböcke (7) mit in Längs- und Querrichtung positionierbaren Aufbauplatten (15) versehen sind, welche die mit der Karosserie (3) zu fügenden Aggregate (16, 17, 18, 19) tragen, die Aufbauböcke (7) mit den aufgelegten Aggregaten von mindestens einem ausgefahrenen Mitnahmebolzen (20) vom vorbeifahrenden Karosseriegehänge (2) des Hängeförderers (1) mitgenommen werden und im Verlauf einer Montagestrecke die Aufbauplatten (15) zusammen mit den Aggregaten nach der darüber befindlichen Karosserie (3) ausgerichtet, mittels Zentrierzylindern (22) zur Karosserie zentriert und die Karosserie entlang der Zentrierzylinder (22) zu den Aggregaten hin abgesenkt wird und in der Folge die Aggregate mit der Karosserie verschraubt, die Mitnahmebolzen (20) am Karosseriegehänge (2) gelöst und die Aufbauböcke (7) aus der Montagelinie in eine Rückführschleife des Ovalbandes (8) verbracht werden, **dadurch gekennzeichnet**, daß parallel zu den Aufbauböcken (7) in einer im Anfangsbereich der Montagestrecke (4) verlaufenden Fügezone (10) ein- oder beidseitig der Aufbauböcke (7) Werkzeugböcke (12) geführt sind, die Werkzeugböcke (12) mit den Mitnahmebolzen (20) sowie mit an den Aufbauplatten (15) der Aufbauböcke (7) angreifenden Ausrichtelementen (21) versehen sind und die Aufbauplatten (15) nach der vom Mitnahmebolzen (20) erkannten Lage der Karosserie (3) ausrichten, an den Aufbauplatten (15) in Richtung der Karosserie (3) ausfahrbare Zentrierzylinder (22) vorgesehen sind, welche im ausgefahrenen Zustand eine Feinzentrierung zwischen der Aufbauplatte (15) und der Karosserie (3) herstellen, die Werkzeugböcke (12) mit Haltewerkzeugen (25) zum Positionieren der auf den Aufnahmeplatten (15) aufliegenden Aggregate gegenüber der Karosserie (3) ausgerichtet sind und die Aufnahmeplatten (15) sowie die Haltewerkzeuge (25) gemeinsam mit den aufliegenden Aggregaten in ausgerichtetem Zustand durch ausfahrbare Grundgestelle (26) des Aufbaubockes (7) sowie der Werkzeugböcke (12) an die Karosserie (3) angehoben werden.

2. Anlage nach Anspruch 1, **dadurch gekennzeichnet**, daß jeweils rechts und links der Fügezone (10) jeweils nur ein Werkzeugbock (12) vorgesehen ist, der zu jedem erneuten Montageprozeß auf einer Führungsbahn (11) in einer Ausgangslage am Beginn der Montagestrecke (4) zurückgeführt wird.

3. Anlage nach Anspruch 1 und 2, **dadurch gekennzeichnet**, daß durch den Hängeförderer (1) in an sich bekannter Weise die an ihm geführten Karosserien (3) von einem oberen Niveau (5) auf ein niedrigeres Niveau (6) im Bereich der Montagestrecke (4) abgesenkt werden.

4. Anlage nach einem oder mehreren der Ansprüche 1 bis 3, **dadurch gekennzeichnet**, daß die Führungsbahn (11) für die Werkzeugböcke (12) über die Montagestrecke (4) hinaus entgegen der Förderrichtung des Hängeförderers (1) zumindest bis in einen Bereich verlängert ist, in welchem sich die Karosserien (3) am Hängeförderer (1) in einem oberen Niveau (5) befinden.

5. Anlage nach einem oder mehreren der Ansprüche 1 bis 4, **dadurch gekennzeichnet**, daß die Ausrichtelemente (21) hydraulisch, elektrisch, pneumatisch oder mechanisch betätigt sind.

## Claims

1. System for joining chassis units to the body of a motor vehicle, in which the body (3) is guided along an assembly line on a hanging conveyor (1) at constant speed and mounting blocks (7) are guided below the body (3) at the same speed as the body on an oval belt (8) engaging by one longitudinal side in the assembly line over an assembly zone (4), the mounting blocks (7) are provided with mounting plates (15) which can be positioned in longitudinal and transverse directions and which carry the units (16, 17, 18, 19) to be joined to the body (3), the mounting blocks (7) with the units on top are entrained by at least one extended driver bolt (20) of the passing body hanger (2) of the hanging conveyor (1), and in the course of an assembly zone the mounting plates (15) together with the units are aligned with the body (3) above them, centred to the body by means of centring cylinders (22), and the body is lowered along the centring cylinders (22) towards the units and subsequently the units are bolted to the body, the driver bolts (20) on the body hanger (2) are undone and the mounting blocks (7) are moved out of the assembly line into a return loop of the oval belt (8), characterised in that tool blocks (12) are guided parallel to the mounting blocks (7) in a joining zone (10) extending in the initial region of the assembly zone (4) on one or both sides of the mounting blocks (7), the tool blocks (12) are provided with the driver bolts (20) as well as with aligning elements (21) engaging the mounting plates (15) of the mounting blocks (7) and align the mounting plates (15) with the position of the body (3) detected by the driver bolt (20), on the mounting plates (15) are provided centring cylinders (22) which can be extended in the direction of the body (3) and which in the extended state produce fine centring between the mounting plate (15) and the body (3), the tool blocks (12) are aligned with holding tools (25) for positioning the units resting on the mounting plates (15) relative to the body (3), and the mounting plates (15) as well as the holding tools (25) together with the units on top are lifted to the body (3) in the aligned state by extendible frames (26) of the mounting block (7) as well as of the tool blocks (12).

2. System according to claim 1, characterised in that on the right and left of the joining zone (10) is provided in each case only one tool block (12) which is returned to each renewed assembly process on a guide track (11) in a starting position at the beginning of the assembly zone (4).

3. System according to claims 1 and 2, characterised in that by the hanging conveyor (1) in a manner known in the art the bodies (3) guided on it are lowered from an upper level (5) to a lower level (6) in the region of the assembly zone (4).

4. System according to one or more of claims 1 to 3, characterised in that the guide track (11) for the tool blocks (12) is extended beyond the assembly zone (4) counter to the direction of transport of the hanging conveyor (1) at least as far as a region in which the bodies (3) on the hanging conveyor (1) are located at an upper level (5).

5. System according to one or more of claims 1 to 4, characterised in that the aligning elements (21) are operated hydraulically, electrically, pneumatically or mechanically.

## Revendications

1. Installation pour assembler des sous-ensembles de châssis avec la carrosserie d'un véhicule automobile, dans laquelle la carrosserie (3) est transportée à vitesse constante le long d'une ligne de montage sur un convoyeur aérien (1), des supports de montage (7) sont déplacés sous la carrosserie (3), à la même vitesse que celle-ci, sur une bande transporteuse (8) en boucle ovale qui avance par un grand côté dans la ligne de montage, sur un tronçon de montage (4), les supports de montage (7) sont munis de plateaux de montage (15) qui peuvent être positionnés dans les directions longitudinale et transversale et portent les sous-ensembles (16, 17, 18, 19) à assembler avec la carrosserie (3), les supports de montage (7) avec les sous-ensembles posés sur ceux-ci sont entraînés par au moins un toc d'entraînement (20) saillant sur la nacelle (2) portant la carrosserie du convoyeur aérien (1) et, sur un tronçon de montage, les plateaux de montage (15) portant les sous-ensembles sont alignés en fonction de la carrosserie (3) située au-dessus, sont centrés par rapport à ladite carrosserie au moyen de vérins de centrage (22) et la carrosserie est abaissée sur les sous-ensembles le long des vérins de centrage (22), puis successivement les sous-ensembles sont vissés à la carrosserie, les tocs d'entraînement (20) la nacelle (2) portant la carrosserie sont dégagés et les supports de montage (7) sont éloignés de la ligne de montage sur une boucle de retour de la bande transporteuse (8) en boucle ovale, caractérisée par le fait que des supports à outils (12) se déplacent d'un côté ou des deux côtés des supports de montage (7), parallèlement aux supports de montage (7) dans une zone d'assemblage (10) qui s'étend dans la région d'entrée du tronçon de montage (4), les supports à outils (12) sont pourvus des tocs d'entraînement (20) ainsi que d'éléments d'alignement (21) qui agissent sur les plateaux de montage (15) des supports de montage (7) et alignent lesdits plateaux de montage (15) après détection de la position de la carrosserie par les tocs d'entraînement (20), que des vérins de centrage (22) pouvant être sortis en direction de la carrosserie (3) sont prévus sur les plateaux de montage (15), lesquels vérins, en position sortie, assurent un centrage précis du plateau de montage par rapport à la carrosserie, que les supports à outils (12) sont équipés d'outils de fixation (25) pour le positionnement des sous-ensembles reposant sur les plateaux de montage (15) par rapport à la carrosserie (3) sont orientés et que les plateaux de montage (15) ainsi que les outils de fixation (25) avec les sous-ensembles sont élevés en direction de la carrosserie (3) dans la position alignée, par des structures (26) télescopiques du support de montage (7) et des supports à outils (12).

2. Installation selon la revendication 2, caractérisée par le fait qu'un seul support à outil (12) est prévu chaque fois à droite et à gauche de la zone d'assemblage (10), lequel support à outil à chaque nouveau cycle de montage est ramené dans sa position de départ au début du tronçon de montage sur un voie de guidage (11).

3. Installation selon les revendications 1 et 2, caractérisée par le fait que les carrosseries (3) transportées par le convoyeur aérien (1) sont abaissées de manière connue en soi par ledit convoyeur aérien d'un niveau (5) supérieur vers un niveau (6) plus bas dans la région du tronçon de montage (4).

4. Installation selon une ou plusieurs des revendications 1 à 3, caractérisée par le fait que la voie de guidage (11) pour les supports à outils (12) est prolongée au-delà du tronçon de montage (4) dans la direction opposée à la direction de transport du convoyeur aérien (1), au moins jusqu'à une région dans laquelle les carrosseries (3) se trouvent à un niveau (5) plus haut sur le convoyeur aérien (1).

5. Installation selon une ou plusieurs des revendications 1 à 4, caractérisée par le fait que les éléments d'alignement (21) sont actionnés par voie hydraulique, électrique, pneumatique ou mécanique.
